Europäisches Patentamt

European Patent Office

Office européen des brevets

(11) Veröffentlichungsnummer: **0 061 077**
A2

(12) # EUROPÄISCHE PATENTANMELDUNG

(21) Anmeldenummer: **82101953.6**

(51) Int. Cl.³: **H 04 N 9/493**

(22) Anmeldetag: **11.03.82**

(30) Priorität: **23.03.81 DE 3111312**

(43) Veröffentlichungstag der Anmeldung:
**29.09.82 Patentblatt 82/39**

(84) Benannte Vertragsstaaten:
**BE NL**

(71) Anmelder: **SIEMENS AKTIENGESELLSCHAFT Berlin
und München
Postfach 22 02 61
D-8000 München 22(DE)**

(72) Erfinder: **Rekow, Heinz-Peter
St. Johann 6
D-8520 Erlangen(DE)**

(54) Verfahren zur bildorientierten Speicherung und Wiedergabe von symbolisierten Netzleitdaten.

(57) Zur bildorientierten Speicherung von symbolisierten Netzleitdaten werden RGB-Signale von Farbsichtgeräten in 16 gleiche Teilbilder zerlegt, deren Einzelfarbbilder auf volle Bildschirmgröße expandiert, die vergrößerten Teilbilder in in drei Horizontalbildabschnitte unterteilt, die zyklisch vertauscht jeweils dreifach fortlaufend gespeichert und anschließend codiert in einem Videorecorder auf Band gespeichert. Zur Wiedergabe werden diese Signale decodiert und einem "Zwei-aus-Drei-Vergleich" unterworfen. Die durchgelassenen Signale werden mit hinterlegten Originalsymbolen verglichen und von den signalähnlichsten Originalsymbolen neue Einzelfarbsignale erzeugt, die in einem Sender zu RGB-Signalen digitalisiert Farbsichtgeräten zur Wiedergabe zugeleitet werden.

EP 0 061 077 A2

SIEMENS AKTIENGESELLSCHAFT          Unser Zeichen
Berlin und München                  VPA 81 P 3 0 3 4 E

Verfahren zur bildorientierten Speicherung und Wiedergabe
von symbolisierten Netzleitdaten

Die Erfindung betrifft ein Verfahren zur bildorientierten
Speicherung und Wiedergabe von symbolisierten Netzleitdaten.

Die bisher in der Netzleittechnik übliche Protokollierung
von Netzleitdaten mit Grobzeit oder mit Feinzeit (in ms)
bzw. zeitfolgerichtig durch Drucker (Blattschreiber) erfaßt
nur die Ereignisse selbst, nicht aber den zur Zeit der
Ereignisse vorliegenden Gesamtzustand des Netzes.

So dient das bekannte mikrorechnergeführte SINAUT®-Leitstellensystem LS11 (Siemens-Druckschrift E-142/1869) in
enger Kopplung mit Fernwirksystemen zur Netzsteuerung und
Netzüberwachung. Es verarbeitet Zustandsmeldungen, Meßwerte,
Zählwerte und andere Ereignisse im Netz und stellt sie auch
auf Farbsichtgeräten dar. Von einem Leitplatz in einer
Leitstelle werden Befehle in das Leitstellensystem eingegeben, im Leitstellensystem geprüft und über Fernwirkverbindungen jeweils Unterstationen zugeleitet. Auch können
nicht aus dem Netz direkt gewonnene Daten durch Markierung
in das Leitstellensystem eingegeben werden.

Die Farbsichtgeräte sind mit ihren Rot-Gelb-Blau-Signalen
(RGB-Signalen) jeweils von gespeicherten bzw. gedruckten
Netzleitdaten oder anderen Eingabedaten ansteuerabhängig,
wozu auch Mikrorechner benutzt sind.

Der Erfindung liegt nun die Aufgabe zugrunde, ohne Drucker
(Blattschreiber) den gesamten, sich u.U. verändernden Netzzustand innerhalb einer wählbaren Zeitspanne zu speichern
und zu beliebiger Zeit am beliebigen Ort wiederzugeben,

Ot 2 Ca / 18.03.1981

wobei die Wiedergabe in beliebig wählbarer Geschwindigkeit abspielbar sein kann.

Die Lösung der Aufgabe gelingt bei dem eingangs genannten Verfahren durch die kennzeichnenden Maßnahmen des Patentanspruchs.

Um eine Minderung der Bildqualität in Form von Verzerrungen, Unschärfen und Bildfehlern durch die Aufnahme- und Wiedergabeverfahren möglichst zu vermeiden, wird das jeweils anstehende Schirmbild (Vollbild) in z.B. 16 gleiche Teilbilder zerlegt, wozu ein von einem Steuerwerk abhängiger Zerleger aus Mikrocomputern vorgesehen ist. In einem vom gleichen Steuerwerk synchron beeinflußten elektronischen Expander wird jedes Teilbild auf die Größe des Vollbildes gebracht und in einen ebenfalls synchron gesteuerten elektronischen Segmentierer in drei Horizontalbildabschnitte unterteilt, die in zyklischer Vertauschung jeweils dreifach fortlaufend gespeichert und in einem Signalumformer in RGB-Signale umgewandelt dem handelsüblichen Coder eines bestimmten Systems (PAL oder SECAM) zugeführt werden, dessen Ausgangssignale in einem entsprechenden handelsüblichen Videorecorder fortlaufend auf Band gespeichert werden.

Die auf Band gespeicherten Daten können zu beliebiger Zeit wieder abgefragt werden, wozu derselbe Videorecorder oder ein anderer des gleichen Systems ausgangsseitig mit einem entsprechenden Decoder verbunden ist, der die nacheinander im Videorecorder gespeicherten Einzelsignale in entsprechende RGB-Signale verwandelt, die in einem gesteuerten Vorspeicher gespeichert werden. Die vorgespeicherten RGB-Signale der Teilbilder werden nach dem "Zwei-aus-Drei-Vergleich" laufend verglichen, wozu drei Rechner parallel arbeiten und deren Rechenergebnisse laufend verglichen werden, so daß bei festgestellten Ungleichheiten mehrheitlich entschieden wird, wobei das jeweilige Ergebnis laufend in

einem zum Vorspeicher synchron gesteuerten Zwischenspeicher gespeichert wird. Die Speicherwerte des Zwischenspeichers werden mit den in einem Symbolspeicher hinterlegten Originalsymbolen laufend in einem synchron gesteuerten Symbolvergleicher verglichen und jeweils die den zwischengespeicherten Signalen ähnlichsten Originalsymbole digitalisiert auf das Niveau der RGB-Signale gebracht und die so erhaltenen einzelfarbigen Teilbilder in einem ebenfalls synchron gesteuerten Sender zum mehrfarbigen Vollbild zusammengesetzt den Farbsichtgeräten in der Netzleitstelle zugeführt.


1 Patentanspruch

Patentanspruch

Verfahren zur bildorientierten Speicherung und Wiedergabe von symbolisierten Netzleitdaten in einem Leitstellensystem mit Farbsichtgeräten, d a d u r c h   g e k e n n - z e i c h n e t , daß fortlaufend das jeweilige Schirmbild mit seinen RGB-Signalen (Vollbild) in eine Anzahl gleicher Teilbilder mit Einzelfarbsignalen aufgeteilt wird, die Teilbilder auf volle Bildschirmgröße vergrößert und die vergrößerten Teilbilder ihrerseits in drei Horizontalbildabschnitte unterteilt werden, danach die Horizontalbild-abschnitte zyklisch vertauscht und die jeweiligen Einzelfarbsignale zu RGB-Signalen zusammengesetzt und diese handelsüblich codiert in einem handelsüblichen Videorecorder auf Band gespeichert werden und daß zur Wiedergabe der gespeicherten Netzleitdaten die auf Band gespeicherten codierten Bildsignale wieder handelsüblich decodiert und fort-laufend in einem Zwei-aus-Drei-Vergleich verglichen, die durchgelassenen Einzelfarbsignale mit hinterlegten Origi-nalsymbolen zur Auswahlerzeugung bildähnlichster Original-symbole verglichen und die ausgewählten Originalsymbole in einem Sender codiert digitalisiert und als RGB-Signale dem Farbsichtgeräten des Leitstellensystems bzw. von Informa-tionsstellen zugeführt werden.